# EUROPÄISCHE PATENTSCHRIFT

(11) **EP 1 106 539 B1**
(45) Veröffentlichungstag und Bekanntmachung des Hinweises auf die Patenterteilung: **25.05.2005**
(21) Anmeldenummer: 00125636.1
(22) Anmeldetag: 23.11.2000
(51) Int. Cl.: B65G 1/137

(54) **Ausgabeautomat**
Automatic dispensing machine
Distributeur automatique

(30) Priorität: 11.12.1999 DE 29921764 U
(43) Veröffentlichungstag der Anmeldung: 13.06.2001
(73) Patentinhaber: GEBR. WILLACH GmbH, D-53809 Ruppichteroth (DE)
(72) Erfinder: Willach, Ulrich, 53819 Neunkirchen-Seelscheid 1 (DE); Schmitt, Werner, 53809 Ruppichteroth-Schönenberg (DE)
(74) Vertreter: Selting, Günther, Dipl.-Ing.

(56) Entgegenhaltungen:
- DE-U- 29 904 863

## Beschreibung

Die Erfindung betrifft einen Ausgabeautomaten gemäß dem Oberbegriff des Anspruchs 1, insbesondere in Apotheken zur Entlastung des Pharmazeuten von Such- und Laufvorgängen.

In DE-U-299 04 863 ist ein gattungsgemäßer Ausgabeautomat beschrieben, der ein Regal mit übereinander angeordneten Schrägfachböden und einen in einem Freiraum vor den Schrägfachböden verfahrbaren Manipulator zum gesteuerten Entnehmen von Gegenständen aufweist. Der Manipulator befördert die entnommenen Gegenstände an eine Umsetzvorrichtung, die die Gegenstände von der Vorderseite des Regals auf die Rückseite transferiert. Dabei ist eine Selektionsvorrichtung vorgesehen, an der auswählbar ist, an welche von mehreren Abgabestellen der Gegenstand transferiert werden soll. Jede dieser Abgabestellen ist einem anderen Ausgabeplatz zugeordnet. In Abhängigkeit davon, von welchem Ausgabeplatz der Befehl zur Lieferung eines Gegenstandes gegeben wurde, wird dieser aus dem Regal entnommene Gegenstand an die zugehörige Abgabestelle gebracht und dann über einen von der Abgabestelle zum Ausgabeplatz führenden Förderweg transportiert. Vom Ausgabeplatz aus kann der Pharmazeut einen Gegenstand anfordern, der dann von dem Ausgabeautomaten an diesen Ausgabeplatz ausgeliefert wird. Dies ermöglicht es, dass der Pharmazeut mit dem Kunden ein Beratungsgespräch führt und dabei mehrere Medikamentenpackungen nacheinander abruft, um dem Kunden die Wirkungen zu erläutern. Der Ausgabeautomat ist auf ein einziges Regal beschränkt. Zur Erzielung einer größeren Lagerkapazität müßte der gesamte Ausgabeautomat einschließlich der Förderwege verdoppelt oder vervielfacht werden.

Aus der Praxis bekannt sind Apotheken-Regalsysteme, bei denen Schrägfachbodenregale mit ihren Entnahmeseiten einander zugewandt sind. An den Schrägfachböden sind gesteuerte Blockiervorrichtungen vorgesehen, die jeweils den untersten auf einem Regalfach liegenden Gegenstand freigeben. Dieser Gegenstand fällt auf einen Förderer, der über ein Fördersystem, das Weichen enthält, mit mehreren Ausgabeplätzen verbunden werden kann. Dieser Ausgabeautomat erfordert eine komplizierte Steuerung für die Durchschaltung des Transportweges für jede Ware vom Lagerort bis zum Zielort. Um die Förderanlage für eine Auslieferung nicht zu lange zu blockieren, erfolgt die Kommissionierung von Gegenständen, d.h. die gleichzeitige Verbringung aller zu einer Bestellung gehörenden Gegenstände zu dem Ausgabeplatz. Würden Gegenstände einzeln zu dem Ausgabeplatz gebracht, würde das gesamte Fördersystem wegen der erforderlichen Weichenstellungen für längere Zeit nicht für andere Ausgabevorgänge zu einem anderen Ausgabeplatz zur Verfügung stehen.

Der vorliegenden Erfindung liegt die Aufgabe zugrunde, einen Ausgabeautomaten von großer Lagerkapazität zu schaffen, der imstande ist, Gegenstände einzeln in schneller Folge zu mehreren Ausgabeplätzen zu befördern.

Die Lösung dieser Aufgabe erfolgt erfindungsgemäß mit den im Anspruch 1 angegebenen Merkmalen. Der erfindungsgemäße Ausgabeautomat hat unterschiedliche Förderwege, die jeweils einem Zielbereich zugeordnet sind. Dies bedeutet, dass von dem Regal zu jedem Zielbereich ein anderer Förderweg führt. Im Zielbereich können die Förderwege sich dann noch zu unterschiedlichen Ausgabeplätzen aufteilen, wenn dies erforderlich sein sollte. In der Regel reichen für ein Apothekensystem zwei Ausgabeplätze aus. In diesem Fall führen die Förderwege ohne Weichen unmittelbar zu dem jeweiligen Ausgabeplatz, der zugleich den Zielbereich bildet. Der Ausgabeautomat weist mehrere Regale auf, von denen jeweils eine erste Abgabestelle mit einem ersten Förderweg verbunden und eine zweite Abgabestelle mit einem zweiten Förderweg verbunden ist. In Abhängigkeit davon, an welcher Abgabestelle der zum einzelnen Regal gehörende Manipulator den entnommenen Gegenstand übergibt, wird dieser Gegenstand auf einem vorbestimmten und unveränderlichen Förderweg zu dem anhand der Abgabestelle ausgewählten Zielbereich transportiert.

Der Ausgabeautomat läßt eine beliebige Erweiterung um weitere Regale zu. Diese müssen nur mit entsprechenden Förderstrecken an die Förderwege angeschlossen werden. Es ist jedoch nicht erforderlich, die Steuerungen der weiteren Regale mit denjenigen anderer Regale zu koordinieren oder eine Vernetzung vorzunehmen. Jedes der Regale liefert unabhängig von anderen Regalen Produkte an die Förderwege.

Der erfindungsgemäße Ausgabeautomat ermöglicht es, Produkte einzeln sehr schnell von einem Regal zu dem jeweiligen Ausgabeplatz zu befördern, ohne dabei die Beförderung anderer Produkte zu dem gleichen Ausgabeplatz oder zu anderen Ausgabeplätzen zu behindern. Er ermöglicht es auch, dass der Pharmazeut einzelne Produkte nur zu Erläuterungszwecken entnimmt und sie anschließend wieder manuell in das Regal zurücklegt.

Ein besonderer Vorteil besteht darin, dass die Regale mit ihren jeweiligen Manipulatoren und den zugehörigen Steuer- und Betriebseinrichtungen unabhängig voneinander arbeiten, so dass Gegenstände in schneller Folge oder auch gleichzeitig ausgegeben werden können. Da jeder Förderweg einem eigenen Zielgebiet zugeordnet ist und keine Weichen oder Kreuzungspunkte vorhanden sind, kann kein Rückstau entstehen. Wenn für die Förderung der Gegenstände zu den jeweiligen Zielbereichen entlang der Förderwege eine Steuerung benötigt wird, so arbeitet diese unabhängig von den Steuer- und Betriebseinrichtungen der einzelnen Regale bzw. Manipulatoren. So kann beispielsweise ein Förderband, das im Zuge eines Förderweges vorgesehen ist, mit einer Lichtschrankensteuerung versehen sein, die den Bandantrieb immer dann in Betrieb setzt, wenn ein Gegenstand auf dem Band abgelegt wird. Es ist auch möglich Förderbänder einzusetzen, die ständig laufen, oder auch Förderstrecken in Form von Rutschen oder Rohren.

In den meisten Fällen wird es ausreichen, zwei Zielgebiete zu versorgen. In diesem Fall sind zwei Förderwege vorhanden und jedes Regal hat zwei Abgabestellen. Es ist jedoch auch möglich, die Zahl der Zielgebiete zu vergrößern. In diesem Fall wird die Anzahl der Förderwege und der Abgabestellen an jedem Regal ebenfalls vergrößert.

Wenn die Regale im Obergeschoss einer Apotheke untergebracht sind, können die Förderwege ausschließlich als Gleitbahnen bestehen.

Bei einer bevorzugten Ausführungsform der Erfindung sind die Regale mit eigenen Steuer- und Betriebseinrichtungen ausgestattet und sie arbeiten unabhängig voneinander. Die einzelnen Regale können als Regalmodule schrankartig ausgebildet sein. Sie enthalten von dem in der Apotheke eingesetzten Warenwirtschaftsrechner nur die Aufforderung, dass ein Produkt, das sich an einer bestimmten Stelle des Regals befindet, an eine bestimmte Abgabestelle transferiert werden soll. Der gesamte Bewegungsablauf wird dann von der Steuer- und Betriebseinrichtung des Regals selbsttätig ausgeführt. Die einzelnen Regalmodule können also parallel und unabhängig voneinander betrieben werden. Ein besonderer Vorteil dieser Maßnahme besteht auch darin, dass ein Ausgabeautomat, unter dem hier auch ein ganzes Lager verstanden werden soll, beliebig um weitere Regalmodule erweitert werden kann.

Vorzugsweise sind die Abgabestellen, von denen individuelle Förderwege in den jeweiligen Zielbereich führen, an der Vorderseite, also der Entnahmeseite, des Regals angeordnet, während die Rückseite des Regals zum Befüllen der Schrägfachböden ohne Störung des Ausgabebetriebs zugänglich ist. Ein besonderer Vorteil besteht darin, dass die Förderwege von der Vorderseite des Regals abgehen, so dass die Rückseite nicht von Fördereinrichtungen versperrt wird. Während des laufenden Manipulator-Betriebes, der an der Vorderseite des Regals stattfindet, kann von der Rückseite her ein Nachfüllen von Gegenständen erfolgen.

Ein Vorteil besteht darin, dass ein manueller Zugriff auf die in dem Regal befindlichen Produkte jederzeit auch bei Versagen des Manipulators oder einer Fördereinrichtung möglich ist. Ein weiterer Vorteil besteht darin, dass kein Umsetzen von Gegenständen von der Vorderseite auf die Rückseite der Regale erforderlich ist.

Vorzugsweise sind mindestens zwei Regale Rücken zu Rücken mit gegenseitigem Abstand angeordnet und zwischen den Regalen ist ein Arbeitsweg vorgesehen. Dieser Arbeitsweg verläuft vorzugsweise auf einer angehobenen Bühne, unter der ein Förderer angeordnet ist. Auf der Bühne können Personen gehen und stehen, ohne durch den Förderer behindert zu werden.

Der Manipulator kann derart gesteuert sein, dass er in Abhängigkeit von dem selektierten Zielbereich die zugehörige Abgabestelle anfährt. Dies hat den Vorteil, dass die Selektion des Zielbereichs durch den Manipulator selbst bzw. durch dessen Steuerung erfolgt und dass keine zusätzliche Selektionsvorrichtung erforderlich ist. Es besteht aber auch die Möglichkeit, das Regal mit einer einzigen Abgabestelle zu versehen, an die der Manipulator sämtliche Gegenstände abgibt und zusätzlich eine Selektionseinrichtung vorzusehen, die die Abgabe über eine Weiche o.dgl. in Abhängigkeit vom Zielbereich durchführt.

Im folgenden wird unter Bezugnahme auf die Zeichnungen ein Ausführungsbeispiel der Erfindung näher erläutert.

Es zeigen:
- Fig. 1: einen schematischen Querschnitt durch einen Ausgabeautomaten,

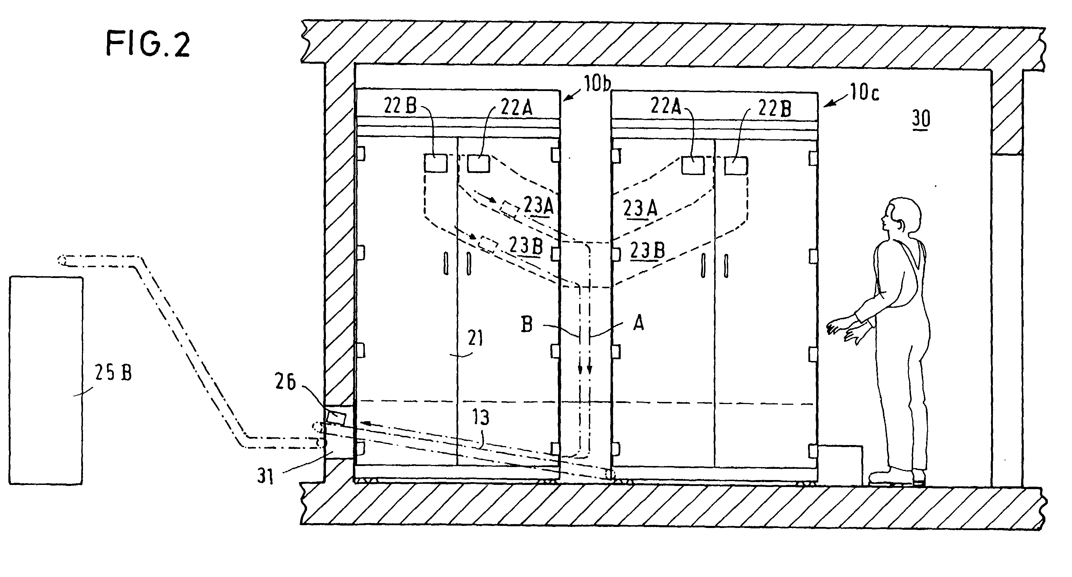

- Fig. 2: einen Schnitt entlang der Linie II-II von Fig. 1, und

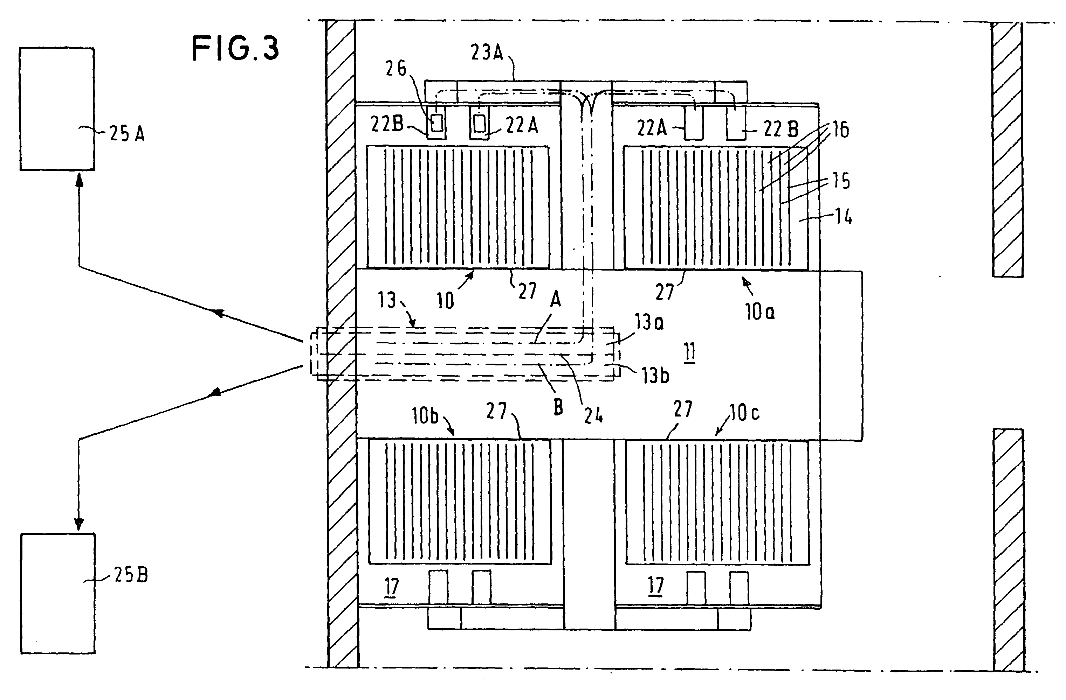

- Fig. 3: eine schematische Draufsicht des Ausgabeautomaten.

Der Ausgabeautomat weist im vorliegenden Fall vier Regale 10,10a,10b und 10c auf, die untereinander gleich ausgebildet sind und von denen nachfolgend nur auf das Regal 10 Bezug genommen wird. Die Regale sind paarweise einander gegenüberliegend zu beiden Seiten eines Arbeitsweges 11 angeordnet. Dieser verläuft auf einer Arbeitsbühne 12, die mit Abstand über dem Fußboden angeordnet ist und unter der ein Förderer 13 angeordnet ist.

Das Schrägfachbodenregal 10 ist generell in gleicher Weise ausgebildet wie dasjenige, das in DE-U-299 04 863 beschrieben ist. Es weist zahlreiche übereinander angeordnete Schrägfachböden 14 auf, auf denen Trennwände 15 angebracht sind. Die Trennwände 15 begrenzen Lagerkanäle 16, die zur Abgabeseite hin Gefälle haben. In jeden Lagerkanal 16 wird eine andere Ware, z.B. ein anderes Medikament, eingegeben.

An der Abgabeseite des Regals 10, die zugleich die Vorderseite darstellt, befindet sich vor den Schrägfachböden 14 ein Freiraum 17, in dem ein Manipulator 18 gesteuert verfahrbar ist. Der Manipulator 18 wird von einer (nicht dargestellten) Antriebseinrichtung entsprechend einem Koordinatensystem in einer Vertikalebene in X- und Y-Richtung verfahren. Er kann vor jedem der Schrägfachböden 14 positioniert werden, und zwar selektiv vor jedem der Lagerkanäle 16 eines Schrägfachbodens 14. Der Manipulator 18 weist eine (nicht dargestellte) Auslösevorrichtung auf, mit der er den vordersten auf dem Schrägfachboden 14 liegenden Gegenstand untergreift und ihn über einen Anschlag 19 hebt, so dass dieser Gegenstand unter Schwerkraftwirkung auf die Tragfläche 20 des Manipulators 18 gleitet. Der Gegenstand stützt sich dann an einer Tür 21 ab, die die Vorderseite des Regals verschließt. An der Tür sind zwei Abgabestellen 22A,22B nebeneinander und auf gleicher Höhe vorgesehen. Bei den Abgabestellen 22A,22B handelt es sich um Löcher in der Tür 21. An jedes Loch schließt sich ein Förderkanal 23A, 23B an. Diese Förderkanäle sind jeweils Bestandteil eines Förderweges A,B, der auch über den Förderer 13 verläuft. Der Förderer 13 ist ein Riemenförderer, der durch eine Zwischenwand 24 in zwei Hälften 13a und 13b unterteilt ist. Am ausgabeseitigen Ende des Förderers 13 teilen sich die Förderwege A und B. Der Förderweg A führt zu dem Ausgabeplatz 25A und der Förderweg B führt zu dem Ausgabeplatz 25B. Jeder dieser Ausgabeplätze bildet bei dem vorliegenden Ausführungsbeispiel einen Zielbereich.

Im beschriebenen Fall sind vier Regale vorhanden, bei denen es sich um baugleiche Regalmodule handelt, die als selbständig handhabbare Schränke ausgebildet sind. Die Gegenstände 26 liegen auf den Schrägfachböden 14, welche von der Entnahmeseite, also vom Freiraum 17 aus, nach hinten ansteigen. Die Rückseite 27, an der die Schrägfachböden 14 die größte Höhe haben, ist dem Arbeitsweg 11 zugewandt. Sie ist offen oder mit einer leicht zu öffnenden Tür versehen, so dass eine Person von der Bühne 12 aus Gegenstände 26 auf die oberen Enden der Schrägfachböden nachfüllen kann.

Unterhalb des untersten Schrägfachbodens ist die Steuer- und Betriebseinrichtung 28 sowie auch die Stromversorgung des Regals untergebracht. Jedes Regal steuert seinen Manipulator 18 selbsttätig und unabhängig von den übrigen Regalen.

Die einzelnen Regale 10,10a,10b,10c sind paarweise zu beiden Seiten des Arbeitsweges 11 angeordnet, wobei die Rückseiten 27 einander zugewandt sind. Zwischen zwei auf derselben Seite des Arbeitsweges angeordneten Regalen verlaufen die Förderwege als Förderer, Rutschen u.dgl., um von der Vorderseite zu der Rückseite 27 zu gelangen, wo sich der Förderer 13 befindet.

Die Regale sind in einem Raum 30 untergebracht, der eine Wandöffnung 31 aufweist, durch die die Gegenstände 26 zum jeweiligen Ausgabeplatz 25A,25B transportiert werden.

Die Steuerung der Ausgabevorgänge an den Regalen erfolgt durch je eine speicherprogrammierbare Steuerung, die in der Steuer- und Betriebseinrichtung 28 enthalten ist. Die Steuerungen der einzelnen Regale arbeiten unabhängig voneinander. Sie kommunizieren untereinander über einen Feldbus. Die Anbindung des Bus-Systems an den Warenwirtschaftsrechner der Apotheke erfolgt durch eine Schnittstelle. Wenn von einem Ausgabeplatz aus ein Produkt von einem Pharmazeuten angefordert wurde, so gibt der Warenwirtschaftsrechner an das Bus-System die Regalnummer, die Lagerkanalnummer, die Stückzahl und die Nummer des Ausgabeplatzes. Die Steuerungen aller Regale erfahren von dieser Anforderung, aber nur der Manipulator des angesprochenen Regals führt sie aus. Er erhält von seiner Steuerung den Befehl, dass ein Produkt, das sich an einer bestimmten Stelle des Regals befindet, an eine bestimmte Abgabestelle transferiert werden soll. Erhält ein Regal eine Anforderung bevor eine bereits bestehende Anforderung von demselben Regal abgearbeitet wurde, so wird die neue Anforderung in der Steuerung des Regals zwischengespeichert und dann unmittelbar nach Beendigung der ersten Anforderung ausgeführt. Auf diese Weise ist sichergestellt, dass der Warenwirtschaftsrechner nicht auf die Erledigung von Anforderungen warten muss.

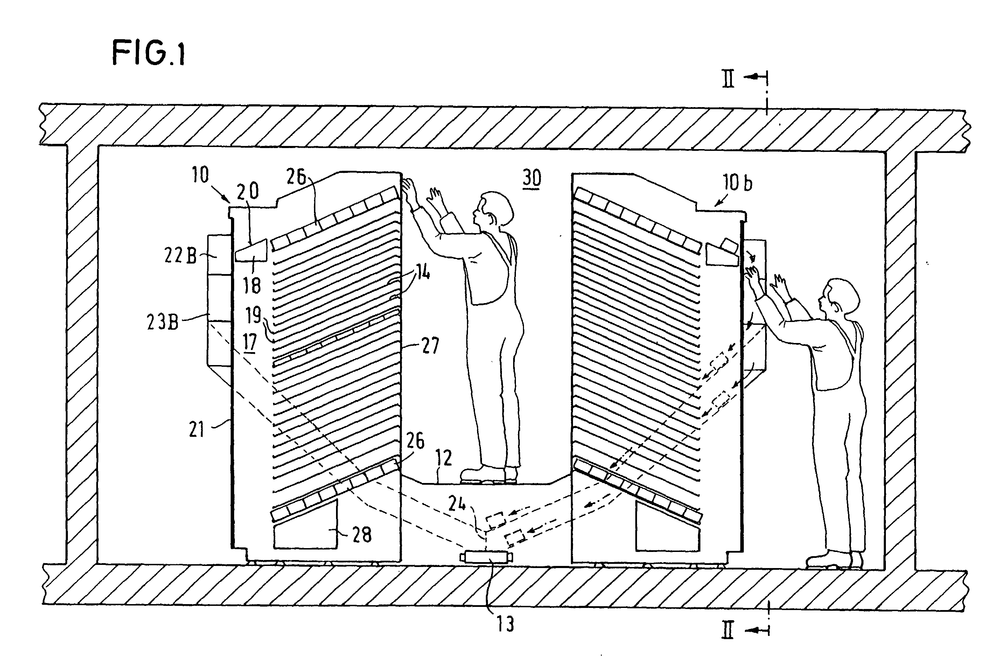

Ein besonderer Vorteil besteht darin, dass jedes Regal bei laufendem Betrieb von der Rückseite her mit neuen Gegenständen befüllt werden kann, so wie dies in Fig. 1 dargestellt ist. Bei Ausfall eines Regals arbeiten die übrigen Regale ordnungsgemäß weiter. Es besteht dann aber die Möglichkeit, aus dem ausgefallenen Regal manuell Gegenstände 26 zu entnehmen. Hierzu können die vorderen Türen 21 geöffnet werde. Die Förderkanäle 23A und 23B sind flexibel, so dass sie ein Öffnen der Türen zulassen. Der Bediener kann dann die in einem Regal vorne liegenden Gegenstände 26 ergreifen und entnehmen. Die Regale sind übermannshoch und reichen jeweils bis in die Nähe der Raumdecke. Von der Bühne 12 aus kann der jeweils oberste Schrägfachboden mit der Hand noch erreicht werden.

## Patentansprüche

1. Ausgabeautomat mit einem Regal (10,10a,10b,10c) mit übereinander angeordneten Schrägfachböden (14), einem in einem Freiraum (17) vor den Schrägfachböden (14) verfahrbaren Manipulator (18) zum gesteuerten Entnehmen und abgeben von Gegenständen (26), wobei das Regal (10) mindestens zwei Abgabestellen (22A,22B) aufweist, von denen jeweils ein individueller Förderweg (A,B) zu einem Zielbereich (25A,25B) führt,
**dadurch gekennzeichnet,**
**dass** mindestens zwei Regale (10,10a,10b,10c) vorgesehen sind, die mit jeweils einer ersten Abgabestelle (22A) an einen allen Regalen gemeinsamen ersten Förderweg (A) angeschlossen sind und mit jeweils einer zweiten Abgabestelle (22B) an einen ebenfalls allen Regalen gemeinsamen zweiten Förderweg (B) angeschlossen sind.

2. Ausgabeautomat nach Anspruch 1, **dadurch gekennzeichnet, dass** die Regale (10,10a,10b,10c) jeweils mit eigenen Steuer- und Betriebseinrichtungen (28) ausgestattet sind.

3. Ausgabeautomat nach Anspruch 1 oder 2, **dadurch gekennzeichnet, dass** die mindestens zwei Abgabestellen (22A,22B) an der Vorderseite des Regals (10) angeordnet sind und dass die dem Freiraum (17) abgewandte Rückseite (27) des Regals (10) zum Befüllen der Schrägfachböden (14) ohne Störung des Ausgabebetriebs zugänglich ist.

4. Ausgabeautomat nach Anspruch 3, **dadurch gekennzeichnet, dass** die Rückseiten (27) von mindestens zwei Regalen (10,10b) einander zugewandt und mit gegenseitigem Abstand angeordnet sind und dass zwischen den Regalen (10,10b) ein Arbeitsweg (11) vorgesehen ist.

5. Ausgabeautomat nach Anspruch 4, **dadurch gekennzeichnet, dass** der Arbeitsweg (11) auf einer Bühne (12) verläuft, unter der ein Förderer (13) über den die Förderwege (A,B) verläufen angeordnet ist.

6. Ausgabeautomat nach einem der Ansprüche 1-5, **dadurch gekennzeichnet, dass** der Manipulator (18) derart gesteuert ist, dass er in Abhängigkeit von dem selektiven Zielbereich (25A,25B) die zugehörige Abgabestelle (22A,22B) anfährt.

## Claims

1. Automatic dispenser comprising a rack (10,10a,10b,10c) having inclined shelves (14) arranged one above the other, a manipulator (18) movable in a free space (17) in front of the inclined shelves (14) for controlled removing and dispensing of articles (26), wherein the rack (10) comprises at least two dispensing locations (22A,22B) from where an individual conveyor path (A,B) leads to a respective place of destination (25A,25B),
**characterized in that**
at least two racks (10,10a,10b,10c) are provided, each comprising a first dispensing location (22A) which is connected to a first conveyor path (A) common to all racks, and a second dispensing location (22B) which is connected to a second conveyor path (B) common to all racks.

2. Automatic dispenser according to claim 1, **characterized in that** each rack (10,10a,10b,10c) is provided with its own control and operating means (28).

3. Automatic dispenser according to claim 1 or 2, **characterized in that** the at least two dispensing locations (22A,22B) are arranged at the front side of the rack (10), and the rear side (27) of the rack (10) opposite to the free space (17) is accessible for the purpose of filling the inclined shelves (14) without the dispenser operation being impeded.

4. Automatic dispenser according to claim 3, **characterized in that** the rear sides (27) of at least two racks (10,10b) are arranged in a manner facing each other and in spaced relationship to each other, and a passage (11) is defined between the racks (10,10b).

5. Automatic dispenser according to claim 4, **characterized in that** the passage (11) is defined on a platform (12) below which a conveyor (13) is arranged on which the conveyor paths (A,B) extend.

6. Automatic dispenser according to claim 1-5, **characterized in that** the manipulator (18) is controlled such that it approaches the respective dispensing location (22A,22B) in dependence on the selected place of destination (25A,25B).

## Revendications

1. Distributeur automatique comportant une étagère (10, 10a, 10b, 10c) présentant des fonds de rayons obliques (14) disposés les uns au-dessus des autres, un manipulateur (18) pouvant être déplacé dans espace libre (17) devant les fonds de rayons obliques (14) pour prélever et livrer des objets (26) de manière commandée, l'étagère (10) présentant au moins deux lieux de livraison (22A, 22B), depuis lesquels respectivement une voie de transport individuelle (A, B) mène à une zone cible (25A, 25B), **caractérisé en ce que**, au moins deux étagères (10, 10a, 10b, 10c) sont prévues, qui sont reliées respectivement à un premier lieu de livraison (22A) sur une première voie de transport (A) commune à toutes des étagères et respectivement à un second lieu de livraison (22B) sur une seconde voie de transport (B) également commune à toutes les étagères.

2. Distributeur automatique selon la revendication 1, **caractérisé en ce que** les étagères (10, 10a, 10b, 10c) sont respectivement équipées d'organes de commande et de traitement (28) propres.

3. Distributeur automatique selon la revendication 1 ou 2, **caractérisé en ce qu'**au moins deux lieux de livraison (22A, 22B) sont disposés sur la face avant de l'étagère (10) et **en ce que** la face arrière (27) de l'étagère (10) détournée de l'espace libre (17) est accessible pour remplir des fonds de rayons obliques (14) sans perturber l'activité de distribution.

4. Distributeur automatique selon la revendication 3, **caractérisé en ce que** les faces arrières (27) d'au moins deux étagères (10, 10b) se font face l'une l'autre et sont disposées à distance l'une de l'autre et **en ce qu'**un couloir de service (11) est prévu entre les étagères (10, 10b).

5. Distributeur automatique selon la revendication 4, **caractérisé en ce que** le couloir de service (11) s'étend sur une plate-forme (12) sous laquelle un convoyeur (13), au-dessus duquel des voies de transport (A, B) s'étendent, est disposé.

6. Distributeur automatique selon l'une quelconque des revendications 1 à 5, **caractérisé en ce que** le manipulateur (18) est commandé de sorte qu'il mette en marche le lieu de livraison associé (22A, 22B) en fonction de la zone cible sélective (25A, 25B).
